# EUROPEAN PATENT SPECIFICATION

(11) **EP 2 050 836 B1**
(45) Date of publication and mention of the grant of the patent: **08.01.2014**
(21) Application number: 07707849.1
(22) Date of filing: 01.02.2007
(51) Int. Cl.: B22D 17/12, C04B 28/24, C22C 47/02, C04B 35/01, C04B 35/64, B22D 19/14, C22C 47/12, C04B 35/80, C22C 49/04

(54) **PREFORM FOR COMPOSITE MATERIAL AND PROCESS FOR PRODUCING THE SAME**
VORFORMLING FÜR VERBUNDWERKSTOFF UND HERSTELLUNGSVERFAHREN DAFÜR
PRÉFORME POUR MATÉRIAU COMPOSITE ET PROCÉDÉ DE PRODUCTION DE CETTE PRÉFORME

(30) Priority: 06.02.2006 JP 2006028698
(43) Date of publication of application: 22.04.2009
(73) Proprietor: Central Motor Wheel Co., Ltd., Anjo-shi, Aichi 446-0004 (JP); TOYOTA JIDOSHA KABUSHIKI KAISHA, Toyota-shi, Aichi-ken, 471-8571 (JP); GE Techno Co., Ltd., Yamagata-shi, Gifu 501-2259 (JP)
(72) Inventor: FUJITA, Makoto, Anjo-shi, Aichi 4460004 (JP); KUMAGAI, Kunio, Anjo-shi, Aichi 4460004 (JP); HASHIMOTO, Masaoki, Anjo-shi, Aichi 4460004 (JP); UEBAYASHI, Hidenori, Toyota-shi, Aichi 4718571 (JP); KAWAI, Hiroshi, Toyota-shi, Aichi 4718571 (JP); SATO, Mitsuyoshi, Toyota-shi, Aichi 4718571 (JP); KATO, Masaru, Yamagata-shi,Gifu 5012259 (JP)
(74) Representative: McCartney, Jonathan William
(86) International application number: PCT/JP2007/051663
(87) International publication number: WO 2007/091471

(56) References cited:
- EP-A1- 0 933 439
- EP-A1- 0 992 307
- EP-A1- 1 190 997
- JP-A- 11 226 719
- JP-A- 11 314 975
- JP-A- 2000 042 720
- JP-A- 2004 035 910
- US-A1- 2005 183 839
- ZHANG Z ET AL: "LIGHT ALLOY COMPOSITE PRODUCTION BY LIQUID METAL INFILTRATION", COMPOSITES, IPC BUSINESS PRESS LTD. HAYWARDS HEATH, GB, vol. 25, no. 5, 1 May 1994 (1994-05-01), pages 380-392, XP000442680, ISSN: 0010-4361, DOI: DOI:10.1016/S0010-4361(94)80008-1

## Description

### [Technical Field]

The present invention relates to a preform for forming a composite material used for forming a metal composite material by being composited with a light metal such as an aluminum alloy, and to a process for producing such a preform for forming a composite material.

### [Background Art]

In order to improve fuel efficiency and driving stability in, for example, automobiles, there is a tendency to increasingly use parts made of a light metal such as aluminum which is excellent in light weight, high durability, low thermal expansion, etc. In particular, a metal composite material made of a light metal composited with a reinforcing material such as ceramics is being applied for parts, such as engine parts, which should be used in severe conditions, to achieve lighter weight and higher durability.

Such a metal composite material may be produced by previously forming a preform for a composite material having a predetermined shape using a reinforcing material such as ceramic fibers and ceramic particles, the obtained preform for a composite material being thereafter impregnated with a melt of a light metal by, for example, a die casting method. The preform for a composite material may be produced by sintering ceramic fibers or/and ceramic particles at a predetermined temperature. Before the sintering, the ceramic fibers or/and ceramic particles are generally mixed with an inorganic binder such as an alumina sol or a silica sol for the purpose of enhancing the binding of the fibers or/and particles. During the sintering, the inorganic binder is gelled and crystallized to bind the reinforcing material bodies, such as ceramic fibers and ceramic particles, to each other.

For use as the above-described engine parts of automobiles, which require improved wear resistance and vibration damping property, there is proposed a metal composite material made of a preform for a composite material impregnated with a light metal such as an aluminum alloy, in which the preform is prepared by mixing graphite, activated carbon, etc. having excellent lubricating property and damping property (for example, Patent Document 1).
[Patent Document 1] Japanese Unexamined Patent Application Publication No. 2004-35910

### [Disclosure of the Invention]

### [Problems to be Solved by the Invention]

The above-described metal composite material could sufficiently exhibit mechanical characteristics such as durability and strength if a melt of the light metal spreads throughout and fully impregnates the preform for a composite material. If, on the other hand, the preform for a composite material is not sufficiently impregnated with the melt, relatively large cavities (unimpregnated portions) will be formed in the metal composite so that the metal composite material will fail to sufficiently exhibit the mechanical characteristics. Thus, the preform for a composite material is required to show excellent air permeability so that a melt of a light metal can flow within the preform. Especially when a high-speed die casting method in which a melt is filled at a relatively high speed to achieve high productivity is adopted, it is essential that the preform for a composite material should have high air permeability.

In the above-described preform for a composite material having the conventional structure in which an inorganic binder such as an alumina sol or a silica sol is mixed for sintering, it is said that the alumina sol or silica sol is crystallized into particles during the sintering performed at 800 to 1,500°C and that the resulting particles deposit on surfaces of ceramic fibers or ceramic particles, or gather to form tight aggregates which deposit on surfaces of or interstices between ceramic fibers or ceramic particles. In such a preform for a composite material, therefore, the space between respective reinforcing materials is narrowed so that the air permeability thereof is reduced as a whole. Thus, when the above-described preform for a composite material having the conventional structure is impregnated with a melt of a light metal, the melt cannot sufficiently flow thereinto, thereby forming above-mentioned cavities in the metal composite material. Further, when the impregnation of the melt of a light metal is carried out by a high-speed die casting method, there are problems that the preform for a composite material is deformed and fractures or cracks are formed in the molded metal composite material. The deformation and formation of cracks are considered to be caused by lack in strength of the preform for a composite material. Thus, the conventional structure in which binding between the reinforcing material bodies is attained by the inorganic binder is ill-suited for a high-speed die casting method.

In general, there is a tendency that the strength of a preform for a composite material is improved whilst the air permeability is reduced with an increase of the content of ceramic fibers or ceramic particles in the preform. Similarly, the air permeability is improved whilst the strength is reduced with a decrease of the content. Thus, in the preform for a composite material, it is not easy to improve both the strength and air permeability at the same time.

The present invention provides a preform for a composite material which has high strength and excellent air permeability and hence is applicable to a high-speed die casting method and which is capable of forming a metal composite material having excellent mechanical properties, and a process for producing such a preform.

### [Means for Solving the Problem]

The present invention provides a preform for a composite material, including sintered ceramic fibers or/and ceramic particles and being usable for forming a metal composite material by being impregnated with a melt of a light metal, characterized in that the preform is obtained by mixing ceramic fibers or/and ceramic particles with a silica sol and calcium carbonate, the resulting mixture being sintered at a predetermined temperature, in that the ceramic fibers or/and ceramic particles are bound to each other by a calcium-silicon sinter produced during the sintering by reaction of the silica sol with calcium monoxide formed by decomposition of the calcium carbonate, and in that gaps are formed between the fibers or/and the particles. The calcium-silicon sinter herein may be either of a product produced as a crystallized compound or a product produced as an amorphous state (so-called glass state).

The preform for a composite material, having the above structure in which the ceramic fibers or/and ceramic particles are bound to each other by the calcium-silicon sinter, exhibits higher strength as compared with a preform having the conventional structure in which ceramic fibers or/and ceramic particles are bound to each other by an inorganic binder crystallized into particles or aggregates. The reason is that the calcium-silicon sinter produced by reaction of the silica sol (SiO₂) with calcium monoxide (CaO) formed by decomposition of the calcium carbonate (CaCO₃) can more tightly bind the ceramic fibers or/and ceramic particles than the inorganic binder of the conventional structure can.

In the preform for a composite material according to the present invention, the ceramic fibers or/and ceramic particles are bound to each other by the calcium-silicon sinter (Ca-Si sinter) and gaps are formed between the fibers or/and the particles. Since the calcium-silicon sinter (Ca-Si sinter) is so formed as to deposit in the form of films on the ceramic fibers or/and ceramic particles, the gaps formed are relatively wide. In contrast, in the conventional structure in which the inorganic binder is crystallized, particles or aggregates of the crystals deposit on surfaces of the ceramic fibers or/and ceramic particles or deposit between the ceramic fibers or/and ceramic particles. As a consequence, the gaps formed in the preform for a composite material according to the present invention are wider than those present in the preform of the conventional structure. It follows that the preform for a composite material of the present invention shows excellent air permeability.

Thus, the preform for a composite material according to the present invention can show both high strength and excellent air permeability. Therefore, even when the preform is impregnated with a melt of a light metal by a high-speed die casting method, the melt can sufficiently impregnate therein without encountering deformation and cracking. Accordingly, the preform for a composite material according to the present invention is applicable to a high speed die casting that can achieve high productivity and is capable of affording a metal composite material having excellent mechanical characteristics.

In one embodiment, there is proposed a preform for a composite material as described above, in which the silica sol mixed with the ceramic fibers or/and ceramic particles contains silica in such an amount that a weight ratio of the weight of the silica to the total weight of the ceramic fibers or/and ceramic particles is not less than 0.01 but not greater than 0.15, and in which the calcium carbonate is mixed with the ceramic fibers or/and ceramic particles in such an amount that a weight ratio of the weight of the calcium carbonate to the total weight of the ceramic fibers or/and ceramic particles is not less than 0.001 but not greater than 0.15. In this case, when no ceramic particles are mixed, the total weight is the weight of the ceramic fibers. When no ceramic fibers are used, the total weight is the weight of the ceramic particles.

In the above constitution, the ceramic fibers or/and ceramic particles are sufficiently tightly bound to each other by the calcium-silicon sinter (Ca-Si sinter) produced from the silica sol (SiO₂) and the calcium monoxide (CaO) formed by decomposition of the calcium carbonate (CaCO₃) and sufficiently wide gaps are formed between the ceramic fibers or/and ceramic particles. Since the amount of the calcium-silicon sinter (Ca-Si sinter) which deposits on the ceramic fibers or/and ceramic particles increases with an increase of the amount of the produced calcium-silicon sinter relative to the amount of the ceramic fibers or/and ceramic particles, gaps formed between the fibers or/and the particles are narrow so that the air permeability tends to decrease as a whole. On the other hand, with a decrease of the amount of the produced calcium-silicon sinter (Ca-Si sinter), the force for binding the ceramic fibers or/and ceramic particles to each other is reduced so that the strength of the preform for a composite material tends to decrease. When the mixing amount of each of the silica sol and calcium carbonate relative to the total weight of the ceramic fibers or/and ceramic particles falls within the weight ratio range as specified above, the calcium-silicon sinter (Ca-Si sinter) is produced in a suitable amount during the sintering. Therefore, the preform for a composite material can achieve well-balanced high strength and excellent air permeability in a stable manner.

The silica sol is preferably used in such an amount that a weight ratio of the weight of the silica to the total weight of the ceramic fibers or/and ceramic particles is not less than 0.04 but not greater than 0.10. Similarly, calcium carbonate is preferably used in such an amount that a weight ratio of the weight of the calcium carbonate to the total weight of the ceramic fibers or/and ceramic particles is not less than 0.04 but not greater than 0.10. The calcium-silicon sinter (Ca-Si sinter) produced using the above amounts of a silica sol and calcium carbonate can give a preform for a composite material having far superior balance of the strength and permeability.

In a further embodiment, there is proposed a preform for a composite material as described above, in which the calcium carbonate mixed with the ceramic fibers or/and ceramic particles together with the silica sol has a particle size of 10 µm or less. Preferably used is calcium carbonate (CaCO₃) having a particle size of 0.1 µm or more, since such calcium carbonate can be relatively easily handled and can be produced in an ordinary manner.

The reactivity of calcium monoxide which reacts with a silica sol (SiO₂) during sintering tends to decrease as the size thereof increases. When calcium carbonate having a particle size of 10 µm or less is mixed, calcium monoxide can sufficiently and easily react with the silica sol so that a calcium-silicon sinter (Ca-Si sinter) can be easily formed as smooth films on the ceramic fibers or/and the ceramic particles. As a consequence, gaps are sufficiently and properly formed between the ceramic fibers or/and the ceramic particles and, therefore, the preform for a composite material can exhibit far superior air permeability. Further, the calcium-silicon sinter (Ca-Si sinter) produced by reaction of carbon monoxide with a silica sol can more tightly bind the ceramic fibers or/and the ceramic particles to each other so that the preform for a composite material exhibits much higher strength. Calcium carbonate having a particle size of not smaller than 0.1 µm but not greater than 5 µm is suitably used since much higher reactivity can be provided.

In a further embodiment, there is proposed a preform for a composite material as described above, in which the ceramic particles prior to the sintering are aluminum borate particles having a particle size of 10 µm or less. Preferably used are aluminum borate particles having a particle size of 0.1 µm or more, since such aluminum borate particles can be relatively easily handled and can be produced in an ordinary manner.

When aluminum borate (9Al₂O_{3˙}2B₂O₃) particles having a particle size of 10 µm or less are mixed, the aluminum borate particles, the silica sol (SiO₂) and the calcium monoxide (CaO) formed by decomposition of the calcium carbonate (CaCO₃) react with each other during the sintering to form a calcium-boron-silicon sinter (Ca-B-Si sinter). Thus, there is formed a preform for a composite material in which the ceramic fibers or/and the ceramic particles are bound to each other by the calcium-boron-silicon sinter (Ca-B-Si sinter). Similar to the above-described calcium-silicon sinter (Ca-Si sinter), the calcium-boron-silicon sinter (Ca-B-Si sinter) can tightly bind the ceramic fibers or/and the ceramic particles to each other and deposit on the fibers or/and particles in the form of films to define relatively wide gaps between the fibers or/and particles. Accordingly, the preform for a composite material of the above constitution can achieve higher strength and excellent air permeability as compared with the preform having the above-described conventional structure. The preform for a composite material of the above constitution can be applied to a high-speed die casting and can form by molding a metal composite material having excellent mechanical characteristics.

The reactivity of the aluminum borate particles with the silica sol (SiO₂) and calcium monoxide (CaO) tends to decrease as the size of the aluminum borate particles increases. So that a calcium-boron-silicon sinter (Ca-B-Si sinter) capable of firmly binding the ceramic fibers or/and the ceramic particles can be sufficiently and easily formed, therefore, the aluminum borate particles mixed in the present constitution have a particle size of 10 µm less. It is more preferred that the aluminum borate particles have a particle size of not smaller than 1 µm but not greater than 5 µm for reasons of far superior reactivity thereof with the silica sol (SiO₂) and calcium monoxide (CaO).

The present invention also provides a process for producing the above-described preform for a composite material, characterized in that the process includes a mixing step for mixing ceramic fibers or/and ceramic particles with a silica sol and calcium carbonate in water to form an aqueous mixture liquid, a dehydrating step for removing water from the aqueous mixture liquid to obtain a mixture, and a sintering step for sintering the mixture at a predetermined temperature so that a calcium-silicon sinter is produced during the sintering by reaction of the silica sol with calcium monoxide formed by decomposition of the calcium carbonate, with the ceramic fibers or/and ceramic particles being bound to each other by the calcium-silicon sinter.

In the sintering step, calcium monoxide (CaO) is formed by decomposition of the calcium carbonate (CaCO₃) and the calcium monoxide (CaO) thus formed reacts with the silica sol (SiO₂) to form a calcium-silicon sinter (Ca-Si sinter). The calcium-silicon sinter (Ca-Si sinter) binds the ceramic fibers or/and ceramic particles to each other. The thus produced preform for a composite material exhibits higher strength as compared with a preform having the conventional structure in which an inorganic binder is used for binding them. As described previously, the calcium-silicon sinter (Ca-Si sinter) can provide stronger binding force as compared with a crystallized inorganic binder such as an alumina sol or a silica sol. Therefore, the preform for a composite material produced by the process of the present invention has high strength.

Further, since the calcium-silicon sinter (Ca-Si sinter) is formed so as to deposit in the form of films on the ceramic fibers or/and ceramic particles, relatively wide gaps are formed between the fibers or/and particles. Such gaps formed are sufficiently wider than those of the fibers or/and particles of the above-described conventional structure in which the inorganic binder is crystallized and sintered. Therefore, the preform for a composite material of the present invention shows excellent air permeability.

Since the ceramic fibers or/and ceramic particles have been stirred in water together with a silica sol and calcium carbonate in the mixing step, the fibers or/and the particles, silica sol and the calcium carbonate are substantially uniformly dispersed throughout the whole mixture prior to the sintering step.
Therefore, in the sintering step, the calcium-silicon sinter (Ca-Si sinter) is substantially uniformly formed throughout the whole mixture so that the ceramic fibers or/and ceramic particles are substantially uniformly bound throughout. Accordingly, the preform for a composite material produced by the process of the present invention is almost no uneven distribution of the strength and air permeability thereof and can achieve high strength and excellent air permeability as a whole.

According to the present production process, the above-described preform for a composite material having high strength and air permeability can be produced in a relatively easy and stable manner. The produced preform for a composite material is applicable to a high-speed die casting and is capable of affording a metal composite material having high mechanical characteristics by molding.

In one embodiment, there is proposed a process for producing a preform for a composite material as described above, in which the silica sol mixed in the mixing step contains silica in such an amount that a weight ratio of the weight of the silica to the total weight of the ceramic fibers or/and ceramic particles is not less than 0.01 but not greater than 0.15, and in which the calcium carbonate is mixed in the mixing step in such an amount that a weight ratio of the weight of the calcium carbonate to the total weight of the ceramic fibers or/and ceramic particles is not less than 0.001 but not greater than 0.15. In this case, when no ceramic particles are mixed, the total weight is the weight of the ceramic fibers. When no ceramic fibers are used, the total weight is the weight of the ceramic particles.

When the aqueous mixture liquid prepared in the above mixing step is subjected to a dehydrating step and then sintered in a sintering step, the ceramic fibers or/and ceramic particles are sufficiently tightly bound to each other by the calcium-silicon sinter (Ca-Si sinter) produced in the sintering step, while sufficiently wide gaps are formed between the fibers or/and the particles. In this case, when the amounts of the silica sol (SiO₂) and calcium carbonate (CaCO₃) mixed in the mixing step are greater than the above specified weight ratios thereof relative to the total weight of the ceramic fibers or/and ceramic particles, the amount of the calcium-silicon sinter (Ca-Si sinter) produced increases and the amount of the sinter which deposits on the ceramic fibers or/and ceramic particles increases. As a result, gaps formed between the fibers or/and the particles are narrow so that the air permeability of the preform for a composite material tends to decrease. On the other hand, when the amounts of the silica sol (SiO₂) and calcium carbonate (CaCO₃) are less than the above specified weight ratios thereof relative to the total weight, the amount of the calcium-silicon sinter (Ca-Si sinter) produced is reduced so that the force with which the ceramic fibers or/and ceramic particles are bound to each other is reduced and, hence, the strength of the preform for a composite material tends to decrease. When the using amount, in terms of the weight ratio, of each of the silica sol (SiO₂) and calcium carbonate (CaCO₃) is as specified above, it is possible to produce a preform for a composite material having well-balanced high strength and excellent air permeability in a stable manner.

The silica sol mixed in the mixing step is preferably used in such an amount that a weight ratio of the weight of the silica to the total weight of the ceramic fibers and ceramic particles is not less than 0.04 but not greater than 0.10. The calcium carbonate is preferably used in such an amount that a weight ratio of the weight of the calcium carbonate to the total weight is not less than 0.04 but not greater than 0.10. By this expedient, a preform for a composite material having far superior balance of high strength and excellent permeability can be produced.

In a further embodiment, there is proposed a process for producing a preform for a composite material as described above, in which the calcium carbonate mixed in the mixing step has a particle size of 10 µm or less.

The reactivity of calcium monoxide (CaO) which reacts with a silica sol (SiO₂) in the sintering step tends to decrease as the size thereof increases. For this reason, when calcium carbonate having a particle size of 10 µm or less is mixed in the mixing step, calcium monoxide can sufficiently and easily react with the silica sol in the sintering step so that a calcium-silicon sinter (Ca-Si sinter) can be formed as smooth films which deposit on the ceramic fibers or/and the ceramic particles. As a consequence, gaps are sufficiently and properly formed between the ceramic fibers or/and the ceramic particles and, therefore, it is possible to produce a preform for a composite material having far superior air permeability. Further, calcium carbonate having a relatively small particle size of 10 µm or less is easily dispersed in the mixing step and can be present in a more uniform state in the aqueous mixture liquid. Therefore, the calcium-silicon sinter (Ca-Si sinter) produced in the sintering step can deposit on the ceramic fibers or/and the ceramic particles in more uniformly throughout the entire ceramic fibers or/and ceramic particles.

Thus, the preform for a composite material produced by the process of the present invention exhibits its high strength and excellent air permeability more uniformly throughout of the entire preform and is excellent in stability and balance.

Preferably used is calcium carbonate having a particle size of 0.1 µm or more, since such calcium carbonate can be relatively easily handled and can be easily produced. Calcium carbonate having a particle size of not smaller than 0.1 µm but not greater than 5 µm is suitably used so that much higher reactivity with the silica sol can be provided.

In a further embodiment, there is proposed a process for producing a preform for a composite material as described above, in which aluminum borate particles having a particle size of 10 µm or less are mixed as said ceramic particles to form the aqueous mixture liquid.

When aluminum borate (9Al₂O_{3˙}28₂O₃) particles having a particle size of 10 µm or less are mixed in the mixing step, the calcium monoxide (CaO) separated from the calcium carbonate (CaCO₃) reacts with the silica sol (SiO₂) and with the aluminum borate particles in the sintering step to form a calcium-boron-silicon sinter (Ca-B-Si sinter). The ceramic fibers or/and the ceramic particles are bound to each other by the calcium-boron-silicon sinter (Ca-B-Si sinter) with sufficient gaps being formed between the fibers or/and particles. As the size of the aluminum borate particles (9Al₂O_{3˙}2B₂O₃) decreases, the reactivity thereof with the calcium monoxide (CaO) and with the silica sol (SiO₂) tends to increase. For this reason, the use of aluminum borate particles have a particle size of 10 µm or less sufficiently and easily form a calcium-boron-silicon sinter (Ca-B-Si sinter) capable of firmly binding the ceramic fibers or/and the ceramic particles.

Therefore, according to the process of the present invention, a preform for a composite material which can achieve high strength and excellent air permeability may be produced. When the preform for a composite material obtained by the process of the present invention is applied to a high-speed die casting, a metal composite material having excellent mechanical characteristics can be molded.

It is preferred that the aluminum borate particles (9Al₂O₃·2B₂O₃) mixed in the mixing step have a particle size of not smaller than 1 µm but not greater than 5 µm for reasons of further improved reactivity.

### [Effect of the Invention]

As described above, the present invention provides a preform for a composite material obtained by mixing ceramic fibers or/and ceramic particles with a silica sol and calcium carbonate, the resulting mixture being sintered at a predetermined temperature, in which the ceramic fibers or/and ceramic particles are bound to each other by a calcium-silicon sinter produced during the sintering by reaction of the silica sol with calcium monoxide formed by decomposition of the calcium carbonate, and in which gaps are formed between the fibers or/and the particles. Thus, the preform can show higher strength and excellent air permeability as compared with a preform of the above-described conventional structure in which bonding is effected by crystallization of an inorganic binder. Additionally, the preform for a composite material is applicable to a high-speed die casting that can achieve high productivity and is capable of affording by molding a metal composite material having excellent mechanical characteristics.

In the embodiment in which the silica sol mixed with the ceramic fibers or/and ceramic particles contains silica in such an amount that a weight ratio of the weight of the silica to the total weight of the ceramic fibers or/and ceramic particles is not less than 0.01 but not greater than 0.15, and in which the calcium carbonate is mixed with the ceramic fibers or/and ceramic particles in such an amount that a weight ratio of the weight of the calcium carbonate to the total weight of the ceramic fibers or/and ceramic particles is not less than 0.001 but not greater than 0.15, well balanced high strength and excellent air permeability can be achieved in a stable manner.

In the embodiment in which the calcium carbonate mixed with the ceramic fibers or/and ceramic particles has a particle size of 10 µm or less, since calcium monoxide produced by decomposition of the calcium carbonate can easily react with the silica sol, a calcium-silicon sinter can be formed as smooth films on the ceramic fibers or/and the ceramic particles. As a consequence, higher strength and far superior air permeability can be achieved.

In the embodiment in which the ceramic particles prior to the sintering are aluminum borate particles having a particle size of 10 µm or less, the aluminum borate particles, the silica sol and the calcium monoxide formed by decomposition of the calcium carbonate react with each other to form a calcium-boron-silicon sinter by which the ceramic fibers or/and the ceramic particles are bound to each other. The preform for a composite material too can achieve higher strength and excellent air permeability as compared with the preform having the above-described conventional structure.

The process for producing the above-described preform for a composite material includes a mixing step for mixing ceramic fibers or/and ceramic particles with a silica sol and calcium carbonate in water to form an aqueous mixture liquid, a dehydrating step for removing water from the aqueous mixture liquid to obtain a mixture, and a sintering step for sintering the mixture at a predetermined temperature so that that a calcium-silicon sinter is produced during the sintering by reaction of the silica sol with calcium monoxide formed by decomposition of the calcium carbonate, with the ceramic fibers or/and ceramic particles being bound to each other by the calcium-silicon sinter. Thus, a preform for a composite material having high strength and air permeability can be produced in a relatively easy and stable manner. Further, the preform for a composite material obtained by the above process is applicable to a high-speed die casting, shows high productivity and enables to give a metal composite material having high mechanical characteristics.

In the process in which the silica sol mixed in the mixing step contains silica in such an amount that a weight ratio of the weight of the silica to the total weight of the ceramic fibers or/and ceramic particles is not less than 0.01 but not greater than 0.15, and in which the calcium carbonate is mixed in the mixing step in such an amount that a weight ratio of the weight of the calcium carbonate to the total weight of the ceramic fibers or/and ceramic particles is not less than 0.001 but not greater than 0.15, it is possible to produce a preform for a composite material having well-balanced high strength and excellent air permeability in a stable manner.

In the process in which the calcium carbonate mixed in the mixing step has a particle size of 10 µm or less, calcium monoxide (CaO) produced by decomposition of the calcium carbonate can easily react with a silica sol so that a calcium-silicon sinter can be deposit as smooth films on the ceramic fibers or/and the ceramic particles. Thus, the preform for a composite material produced by the process exhibits its high strength and excellent air permeability in a more balanced state and in a stable manner.

In the process in which aluminum borate particles having a particle size of 10 µm or less are mixed as the ceramic particles to form an aqueous mixture liquid, the aluminum borate particles react with the silica sol and with the calcium monoxide produced by decomposition of the calcium carbonate in the sintering step to form a calcium-boron-silicon sinter. A preform for a composite material in which the ceramic fibers or/and the ceramic particles are bound to each other by the calcium-boron-silicon sinter shows higher strength and excellent permeability as compared with the preform having the above-described conventional structure.

### [Best Mode for Carrying Out the Invention]

Examples of the present invention will be described in detail with reference to the accompanying drawings.

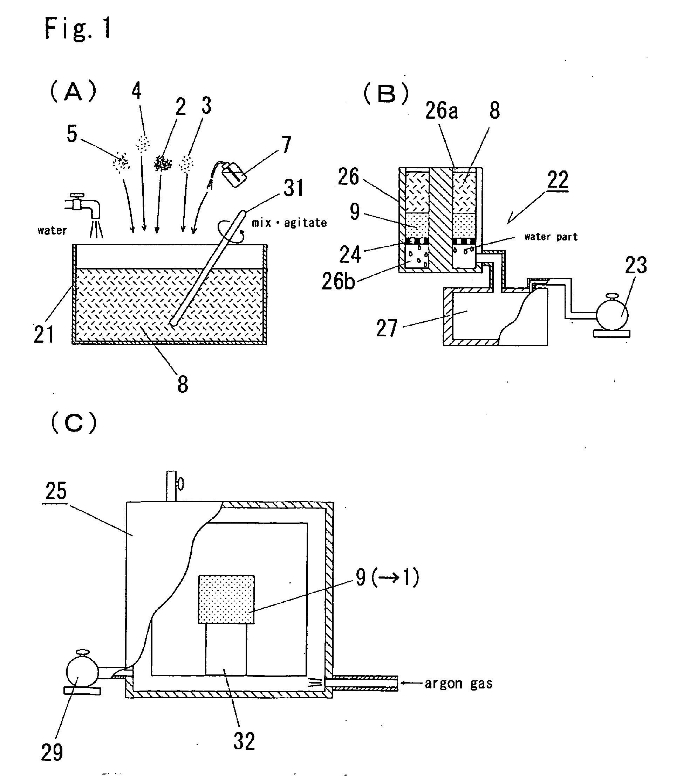

FIG. 1 is a view illustrating a production process for producing a preform 1 for a composite material. The production process includes a mixing step, a dehydrating step, a drying step and a sintering step. FIG. 1(A) illustrates a mixing step in which respective materials are substantially uniformly mixed with stirring with a stirrer bar 31 in water contained in a given vessel 21 to obtain an aqueous mixture liquid 8. The aqueous mixture liquid 8 is then transferred from the vessel 21 to a suction molding machine 22. FIG. 1(B) illustrates a dehydrating step in which water is removed from the aqueous mixture liquid 8 by suction through a filter 24 with a vacuum pump 23 to provide a mixture 9. The mixture 9 is then taken out of the suction molding machine 22 and subjected to a drying step (not shown) for thoroughly drying same. FIG. 1(C) illustrates a sintering step in which the mixture 9 is placed on a table 32 disposed within a heating furnace 25. The inside of the heating furnace 25 is made vacuum by a vacuum pump 29 connected to the heating furnace 25 and is then heated in a predetermined atmosphere for sintering to obtain a desired preform 1 for a composite material.

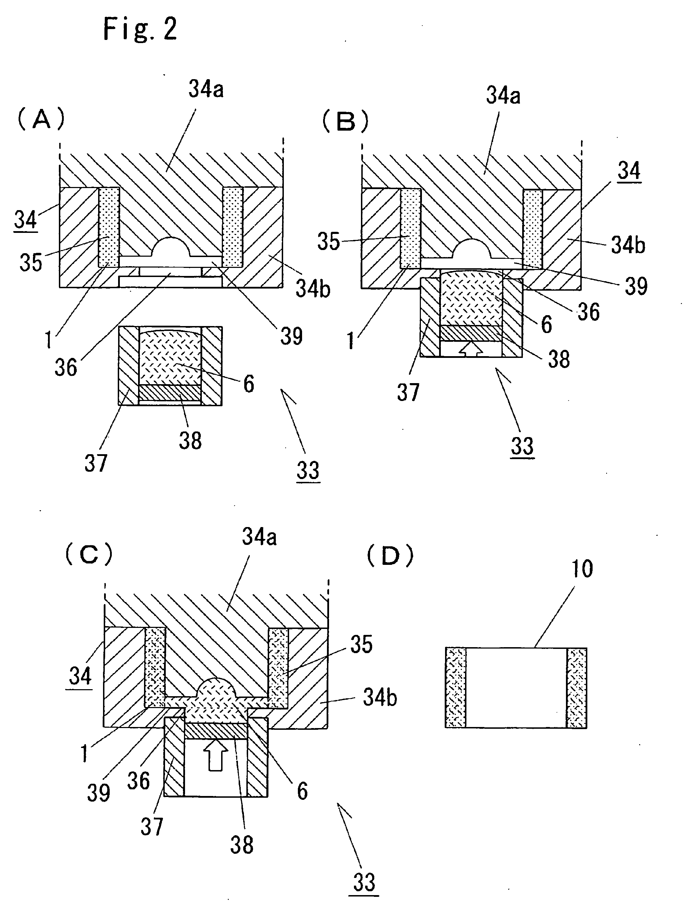

Next, the preform 1 for a composite material is subjected to a die casting step illustrated in FIG. 2 so that the preform 1 is impregnated with a melt 6 of an aluminum alloy to mold a metal composite material 10. The die casting step is performed with a die casting device 33 which includes, as shown in FIG. 2 (A), a mold 34 adapted to define a cavity 35 of a predetermined shape, a sleeve 37 adapted to retain the melt 6 to be injected into the cavity 35, and a plunger tip 38 moveably disposed for advancing and retracting movement in the sleeve 37 and adapted to inject the melt 6. The preform 1 for a composite material is placed in the cavity 35 of the mold 34, while the melt 6 to be injected into the cavity 35 is charged in the sleeve 37 with the plunger tip 38 being maintained in the retracted position. Then, as shown in FIG. 2(B), the sleeve 37 is connected to a gate 36 of the mold 34. The plunger tip 38 is driven and advanced toward the extended position so that the melt 6 in the sleeve 37 is injected into the cavity 35, whereby obtaining the metal composite material 1. The die casting device 33 is so designed as to permit the advancing and retracting speed of the plunger tip 38 to be changed. By adjusting the driving speed to a relatively high speed, it is possible to perform so called high-speed die casting.

The following examples will illustrate a production process for the above-described preform 1 for a composite material, a die casting step for impregnating the preform 1 for a composite material with a melt 6 of an aluminum alloy, the preforms 1 for composite materials 1 molded in respective steps, and metal composite materials 10.

### [Embodiment 1]

In the above-described mixing step (FIG. 1(A)), the following materials (i) to (v) are added to water in a vessel 21.
(i) Alumina short fibers 2 (average fiber diameter: 5 µm, average bulk ratio: 20 cc/5 gf)
(ii) Aluminum borate particles 3 (9Al₂O_{3˙}2B₂O₃, average particle diameter: 30 µm)
(iii) Calcium carbonate particles 4 (CaCO₃, average particle diameter: 0.3 µm)
(iv) Graphite particles 5 (average particle diameter: 20 µm)
(v) Silica sol 7 (SiO₂, aqueous colloidal solution having a concentration of about 40 %)

The average fiber diameter, average bulk ratio and average particle diameter are mean values of the fiber diameter, bulk ratio and particle diameter, respectively, and there are variations. The alumina short fibers 2 are ceramic fibers according to the present invention. The aluminum borate particles 3 and graphite particles 5 are ceramic particles according to the present invention. These ceramic fibers and ceramic particles are so called reinforcing materials.

Using amounts were adjusted such that the alumina short fibers 2 was about 10 % by volume, the aluminum borate particles 3 was about 8 % by volume and the graphite particles 5 was about 6 % by volume. The weight of the calcium carbonate particles 4 was such that the weight ratio thereof to the total weight of the alumina short fibers 2, the aluminum borate particles 3 and the graphite particles 5 was about 0.05. A silica sol 7 was used in such an amount that the weight ratio of the silica in the aqueous sol to the above total weight was about 0.06.

The aqueous liquid containing the above materials (i) to (v) is stirred with a stirrer bar 31 to obtain an aqueous mixture liquid 8 in which respective materials are substantially uniformly mixed. The calcium carbonate 4 having a small particle size shows good dispersibility and, therefore, is present substantially throughout the whole mass of the aqueous mixture liquid 8.

The aqueous mixture liquid 8 is then transferred to a suction molding device 22 and is subjected to the above-described dehydration step (FIG. 1(B)). The suction molding device 22 has a cylindrical, aqueous liquid retaining section 26 having an inside space divided by a filter 24 into upper and lower regions. The upper region 26a receives a feed of the aqueous mixture liquid 8. The device 22 further includes a water storage section 27 disposed beneath the aqueous liquid retaining section 26 and in liquid communication with the lower region 26b of the aqueous liquid retaining section 26, and a vacuum pump 23 connected to the water storage section 27 and adapted to suction the water of the aqueous liquid retaining section 26 through the water storage section 27.

In the dehydration step, the aqueous mixture liquid 8 is fed to the upper region 26a of the aqueous liquid retaining section 26 of the suction molding device 22. Thereafter, the vacuum pump 23 is driven to suction water of the aqueous mixture liquid 8 through the lower region 26b of the aqueous liquid retaining section 26 and the water storage section 27. As a result, the water of the aqueous mixture liquid 8 flows down through the filter 24 to provide a cylindrical mixture 9 of the above-described materials. The mixture 9 is taken out of the suction molding device 22 and placed in a drying furnace at about 120°C to perform a drying step for sufficiently remove water therefrom (not shown).

Since the mixture 9 after the above-described dehydration step is derived from the aqueous mixture liquid 8 in which each of the materials has been substantially uniformly dispersed therein in the mixing step, each of the materials is also substantially uniformly dispersed in the mixture 9. In the mixture 9, the silica sol 7 deposits in the form of films on surfaces of the alumina short fibers 2, the aluminum borate particles 3 and the graphite particles 5, while the calcium carbonate particles 4 substantially uniformly deposit throughout the entire region of the silica sol 7 (not shown) . Further, adjacent alumina short fibers 2, aluminum borate particles 3 and graphite particles 5 are in a state bonded to each other by an adhesion force of the silica sol 7 (not shown). As a consequence of this structure, the mixture 9 is prevented from deforming or breaking and can retain its shape during transfer to the succeeding heating furnace 25. The state of binding between the reinforcing materials by the adhesion force of the silica sol 7 is weaker than that after the hereinafter described sintering step but can withstand relatively gentle transportation.

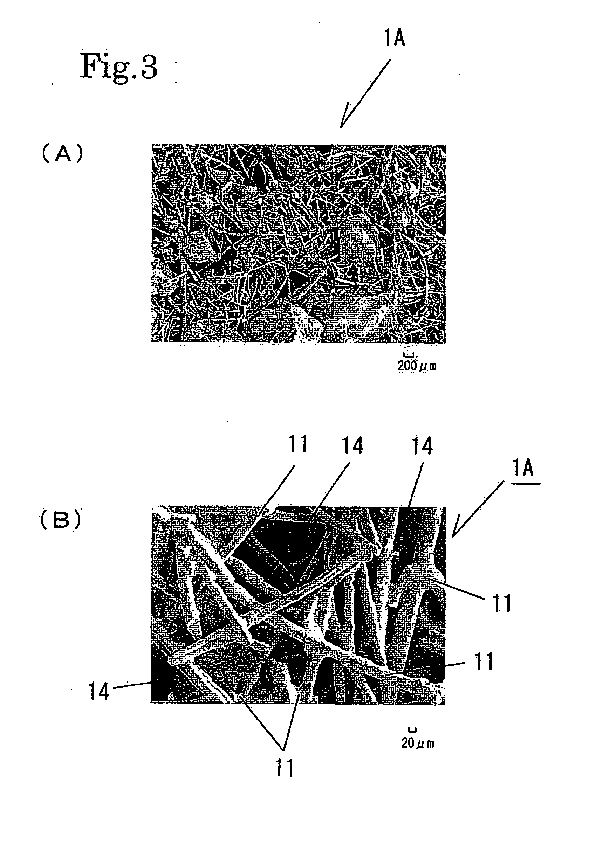

The next process is the above-described sintering step (FIG. 1(C)). The above-obtained mixture 9 is placed on a table 32 disposed within the heating furnace 25. A vacuum pump 29 is then driven so that the inside of the heating furnace 25 is made vacuum by a vacuum at about 10 Pa. Thereafter, the heating furnace 25 is heated and maintained at about 1,150°C while flowing a nitrogen gas at a constant flow rate of 5 L/min. The furnace is then cooled to room temperature (not shown) to obtain a cylindrical preform 1A for a composite material (refer to FIG. 3). Since graphite particles 5 are mixed in Embodiment 1, the sintering step is carried out in a nitrogen gas atmosphere so as not to disappear by oxidation.

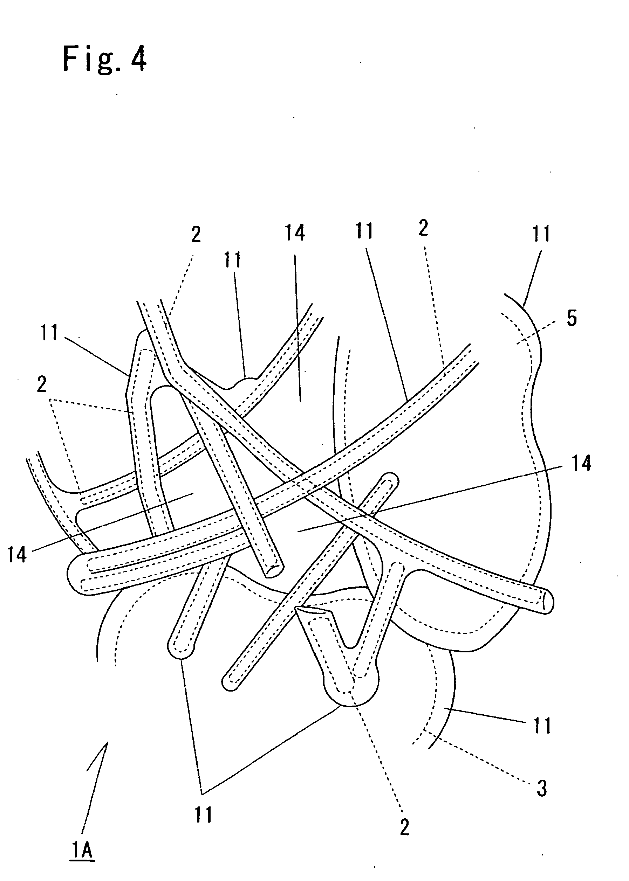

In the sintering step, the calcium carbonate particles (CaCO₃) 4 which deposit on the silica sol 7 are decomposed at a high temperature into calcium monoxide (CaO) and carbon dioxide (CO₂). The calcium monoxide (CaO) in turn reacts with the silica sol (SiO₂) 7 (not shown) to form a calcium-silicon sinter (Ca-Si sinter) 11 in a glassy state (refer to FIGs. 3 and 4). In this instance, the silica sol 7 is uniformly dispersed in the mixture 9 and deposits in the form of films on surfaces of the alumina short fibers 2, the aluminum borate particles 3 and the graphite particles 5, as described above. Further, the calcium carbonate particles 4 are also uniformly dispersed and deposit on the silica sol 7. Therefore, the calcium-silicon sinter (Ca-Si sinter) 11 can be formed substantially uniformly in the form of films on the alumina short fibers 2, the aluminum borate particles 3 and the graphite particles 5 (refer to FIG. 4). The thus formed calcium-silicon sinter tightly binds the reinforcing materials of the alumina short fibers 2, the aluminum borate particles 3 and the graphite particles 5 to each other. As a consequence, the preform 1A for a composite material produced by the sintering step can exhibit high strength.

It is seen in the enlarged photograph of FIG. 3 that the calcium-silicon sinter (Ca-Si sinter) 11 of the preform 1A for a composite material deposits, in the form of smooth films, to cover the alumina short fibers 2, the aluminum borate particles 3 and the graphite particles 5. It is also confirmed that the adjacent reinforcing materials are bound to each other by the calcium-silicon sinter 11 (refer to FIG. 4). Since the calcium-silicon sinter 11 deposits, in the form of films, to cover the alumina short fibers 2, the aluminum borate particles 3 and the graphite particles 5, relatively wide gaps 14 are defined between the reinforcing materials. Therefore, the preform 1A for a composite material has excellent air permeability.

Thus, in the preform 1A for a composite material, the calcium-silicon sinter 11 deposits, in the form of films, to substantially uniformly cover the alumina short fibers 2, the aluminum borate particles 3 and the graphite particles 5 substantially throughout the entirety thereof. Accordingly, the strength and air permeability of the preform are obtainable substantially uniformly throughout its entirety so that the preform exhibits high strength and excellent air permeability in a stable manner as a whole.

The above-described preform production process for producing the preform 1 for a composite material constitute the process for producing a preform for a composite material according to the present invention.

Next, the preform 1A for a composite material obtained by the above-described preform production process is composited with an aluminum alloy using a die casting device 33 (refer to FIG. 2) to mold a desired metal composite material 10A. The die casting device 33 is configured to impregnate the preform 1A for a composite material with a melt 6 of an aluminum alloy (JIS ADC12). A mold 34 used in Embodiment 1 is configured to define a cylindrical cavity 35 when a male upper mold 34a engages a female lower mold 34b. The cylindrical preform 1A for a composite material is able to be fitted in the cavity 35. The lower mold 34b of the mold 34 is provided with a connecting section (not shown) for connecting a sleeve 37 thereto and with a gate 36 through which the melt 6 within the sleeve 37 can flow into the cavity 35 when the sleeve 37 is connected thereto. When the upper mold 34a engages the lower mold 34b, a passage 39 is also defined so that the cavity 35 is in fluid communication with the gate 36 through the passage 39. Thus, the melt 6 fed to the gate 36 flows into the cavity 35 through the passage 39.

First, the preform 1A for a composite material is preheated to about 600°C. The mold 34 is maintained at 200 to 250°C. The preheated preform 1A for a composite material is disposed within the lower mold 34b. The upper mold 34a is then fitted in the lower mold 34b, as shown in FIG. 2 (A), so that the preform 1A for a composite material is accommodated in the cavity 35 of a cylindrical shape. On the other hand, a melt 6 of an aluminum alloy maintained at about 680°C is charged in the sleeve 37 disposed beneath the mold 34 with a plunger tip 38 thereof being maintained in the retracted position (not shown). Thereafter, as shown in FIG. 2(B), the sleeve 37 is moved upward so that an upper end of the sleeve 37 is connected to the gate 36 of the mold 34. The plunger tip 38 is driven and displaced from the retracted position to the advanced position. The melt 6 in the sleeve 37 is thus injected into the cavity 35. The injection rate of the melt 6 through the gate 36 is controlled to a relatively high speed of about 2.0 m/s by the displacing speed of the plunger tip 38.

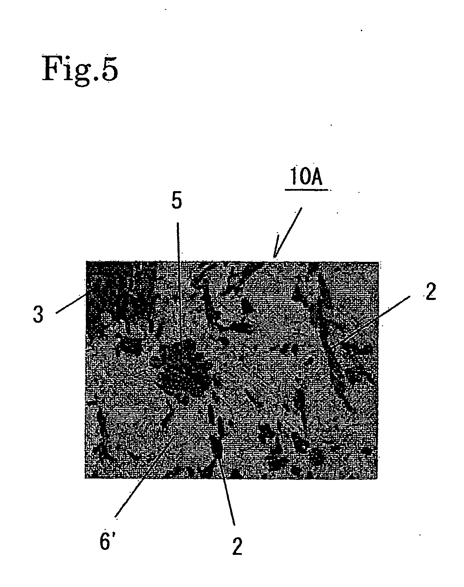

When the melt 6 is charged in the cavity 35, as shown in FIG. 2(C), the plunger tip 38 is stopped moving to stop the feed of the melt 6. After cooling, the sleeve 37 is displaced downward and disengaged from the mold 34. The upper mold 34a and the lower mold 34b of the mold 34 are separated from each other to take the metal composite material 10A (refer to FIG. 5) out of the mold 34 as shown in FIG. 2 (D). The metal composite material 10A separated from the mold 34 is processed to remove burrs formed by the gate 36 and passage 39 to obtain a cylindrical product (not shown). The metal composite material 10A is composed of the preform 1A for a composite material impregnated with the aluminum alloy 6' and is cylindrical in this illustrated Example. A cross-section of the metal composite material 10A was analyzed to reveal that, as shown in FIG. 5, the aluminum alloy 6' is sufficiently impregnated in the interstices between the alumina short fibers 2, the aluminum borate particles 3 and the graphite particles 5 without forming cavities (unimpregnated portions).

Even though, as described above, the melt 6 of an aluminum alloy is injected at a relatively high speed, the preform 1A for a composite material does not deform or break and no cracks or breakage occur in the obtained metal composite material 10A. This fact also indicates that the preform 1 for a composite material obtained in Embodiment 1 has high strength and excellent air permeability.

### [Embodiment 2]

In Embodiment 2, the following materials (i) to (v) are added to water in a vessel 21 to perform the mixing step (FIG. 1(A)) of a preform production process.
(i) Alumina short fibers 2 (average fiber diameter: 5 µm, average bulk ratio: 20 cc/5 gf)
(ii) Aluminum borate particles 3 (9Al₂O₃·2B₂O₃, average particle diameter: 3 µm)
(iii) Calcium carbonate particles 4 (CaCO₃, average particle diameter: 0.3 µm)
(iv) Graphite particles 5 (average particle diameter: 20 µm)
(v) Silica sol 7 (SiO₂, aqueous colloidal solution having a concentration of about 40 %)

The materials are the same as those in Embodiment 1 except that the aluminum borate particles have an average particle diameter of 3 µm. The mixing amount of the aluminum borate particles is the same as that of the aluminum borate particles 3 in Embodiment 1. In the following description, steps and constitution similar to those in Embodiment 1 are omitted and similar reference numerals are affixed to the same components.

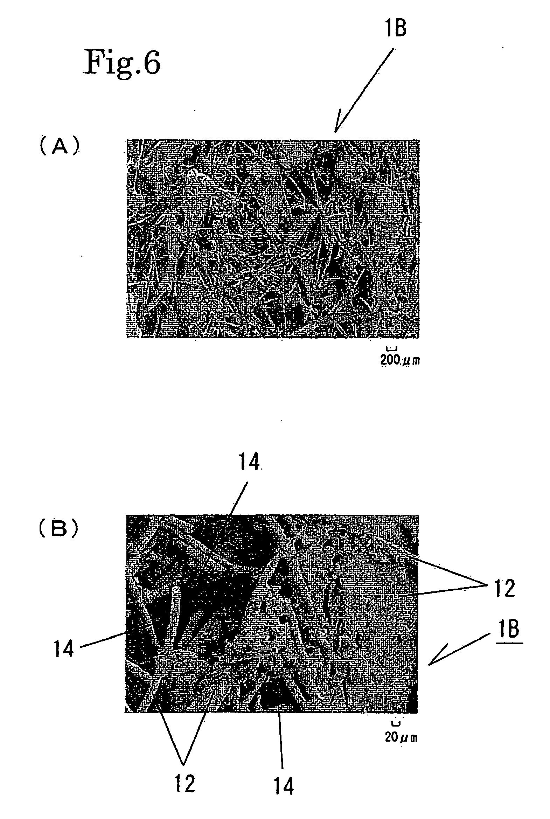

An aqueous mixture liquid 8 obtained in the mixing step is subjected to a dehydration step (FIG. 1(B)) using a suction molding device 22 to remove water and to obtain a mixture 9. The mixture 9 is dried in a drying step (not shown) and is transferred to a sintering step. In the sintering step (FIG. 1(C)), the mixture is heated in a nitrogen gas atmosphere and maintained at about 1,150°C. After cooling of the furnace, a preform 1B for a composite material (refer to FIG. 6) is obtained.

In the sintering step of Embodiment 2, the calcium carbonate particles (CaCO₃) 4 are decomposed at a high temperature into calcium monoxide (CaO) and carbon dioxide (CO₂). The calcium monoxide (CaO) in turn reacts with the silica sol (SiO₂) 7 and with the aluminum borate ( 9Al₂O₃·2B₂O₃) to form a calcium-boron-silicon sinter (Ca-B-Si sinter) 12 in a glassy state (refer to FIG. 6). The calcium-boron-silicon sinter (Ca-B-Si sinter) 12 deposits substantially uniformly in the form of smooth films to cover the alumina short fibers 2 and the graphite particles 5 substantially throughout their entirety, and tightly binds these reinforcing materials to each other, as is evident from the enlarged photograph of the preform 1B for a composite material shown in FIG. 6. Further, similar to the case of Embodiment 1, in the preform 1B for a composite material, too, the calcium-boron-silicon sinter 12 deposits to smoothly cover the surfaces of the reinforcing materials so that relatively wide gaps are defined between the reinforcing materials. Thus the preform has excellent air permeability.

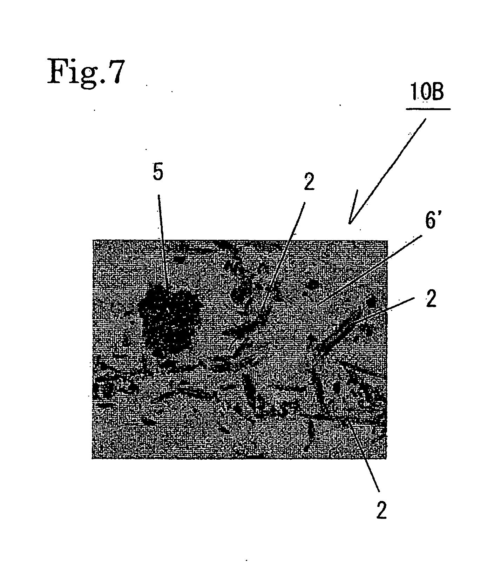

Next, the preform 1B for a composite material is impregnated with a melt 6 of an aluminum alloy (JIS ADC12) using a die casting device 33 as shown in FIG. 2 to form a metal composite material 10B (refer to FIG. 7). The die casting step using the die casting device 33 was also performed in the same manner as that in Embodiment 1 to obtain the desired metal composite material 10B. Though the impregnation of the preform 1B for a composite material with the melt 6 was carried out at a relatively high injection speed (about 2.0 m/s) in the same manner as that in Embodiment 1, the preform did not deform or break and no cracks or breakage occurred and gave the desired metal composite material 10B. This fact indicates that the preform 1B for a composite material has high strength and excellent air permeability. A cross-section of the metal composite material 10B was analyzed to reveal that, as shown in FIG. 6, the aluminum alloy 6' is sufficiently impregnated in the interstices between the alumina short fibers 2 and the graphite particles 5 without forming cavities (unimpregnated portions).

### Comparative Example 1

In Comparative Example 1, a silica sol 7 was mixed as an inorganic binder without using calcium carbonate particles 4 to produce a preform 61 for a composite material having the conventional constitution.

The preform 61 for a composite material is produced by a preform production process similar to that of above Embodiment 1. The following materials (i) to (iv) are stirred in water in a vessel 21 in a mixing step (refer to FIG. 1 (A)) to obtain an aqueous mixture liquid (not shown).
(i) Alumina short fibers 2 (average fiber diameter: 5 pin, average bulk ratio: 20 cc/5 gf)
(ii) Aluminum borate particles 3 (9Al₂O₃·28₂O₃, average particle diameter: 30 µm)
(iii) Graphite particles 5 (average particle diameter: 20 µm)
(iv) Silica sol 7 (SiO₂, aqueous colloidal solution having a concentration of about 40 %)

Comparative Embodiment 1 is the same as Embodiment 1 except that the calcium carbonate particles 4 are not used. In the following description, therefore, steps and constitution similar to those in Embodiment 1 are omitted and similar reference numerals are affixed to the same components.

After a mixing step, a dehydrating step, a drying step and a sintering step are successively performed in the same manner as that in Embodiment 1 (refer to FIG. 1), to obtain a preform 61 for a composite material (refer to FIG. 8). In the preform 61 for a composite material, granular materials 62, which have been formed by crystallization of silica gel 7 at a high temperature during the sintering step, deposit on and outwardly project from the surfaces of the alumina short fibers 2, the aluminum borate particles 3 and the graphite particles 5 (refer to FIG. 9). Further, the granular materials 62 formed by crystallization of the silica sol 7 are partly present as aggregates. Adjacent reinforcing materials are bound by such crystallized silica sol 7.

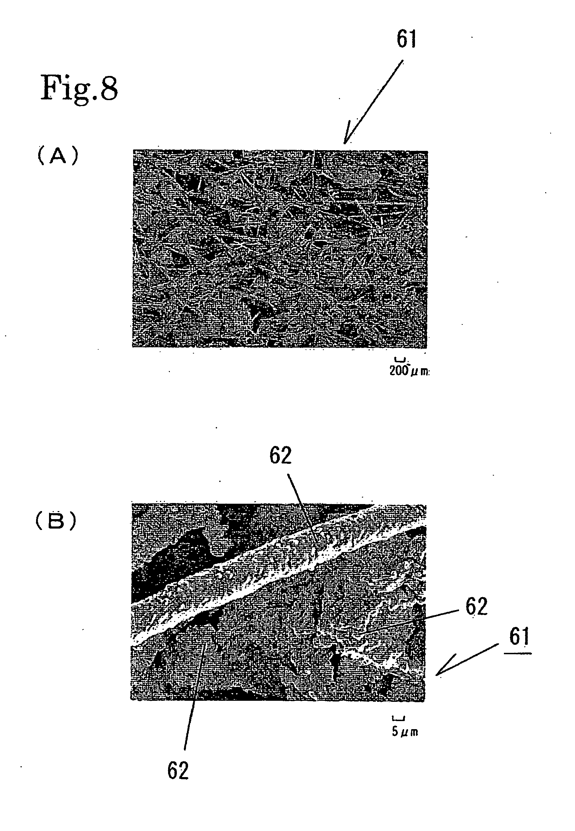

From the enlarged photograph (FIG. 8) of the above preform 61 for a composite material, it can be easily inferred that the gaps between the reinforcing materials are narrowed as compared with those in Embodiments 1 and 2.

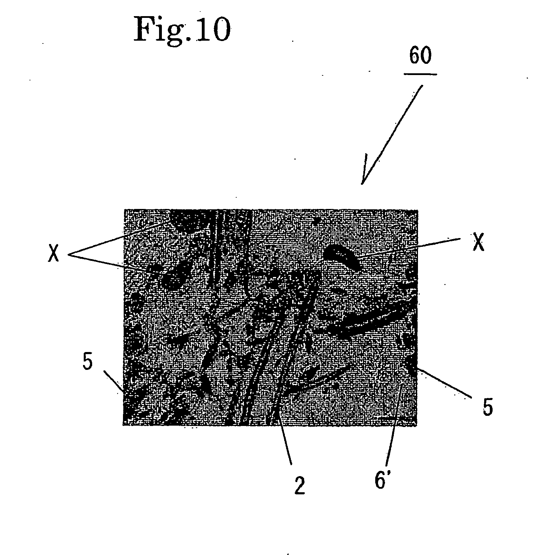

The thus obtained preform 61 for a composite material is impregnated with a melt 6 of an aluminum alloy using the above-mentioned die casting device 33 (refer to FIG. 2) to form a metal composite material 60 (refer to FIG. 10). When the plunger tip 38 was advanced at the same injection speed (about 2.0 m/s) as that in Embodiment 1, the preform 61 deformed so that it was impossible to properly continue the molding. Thus, the injection speed was gradually reduced to a speed so that no deformation of the preform 61 for a composite material or breakage and cracks of the molded product occurred. The injection speed was about 1.0 m/sec. Thus, the preform 61 for a composite material obtained in Comparative Embodiment 1 must be impregnated with the melt 6 at a relatively slow speed. It is inferred that the preform 61 has lower strength and lower air permeability as compared with those of preforms 1A and 1B for composite materials obtained in Embodiments 1 and 2.

A cross-section of the thus molded metal composite material 60 was analyzed to reveal that, as shown in FIG. 10, cavities (unimpregnated portions) were present. Therefore, it is inferred that the metal composite material 60 cannot exhibit a sufficient level of mechanical properties as compared with the metal composite materials 10A and 10B of Embodiments 1 and 2.

The preforms 1A and 1B for composite materials obtained in Embodiments 1 and 2 and the preform 61 for a composite material obtained in Comparative Embodiment 1 were each tested for evaluation of the strength and air permeability. Further, the metal composite materials 10A and 10B of Embodiments 1 and 2 and the metal composite material 60 of Comparative Embodiment 1 were each tested for evaluation of the mechanical property. As representative of the mechanical property, hardness was tested.

In Embodiments 1 and 2 and Comparative Embodiment 1, the preforms 1A, 1B and 61 produced are each a cylindrical shape having an outer diameter of 100 mm, an inner diameter of 90 mm and a height of 120 mm. The metal composite materials 10A, 10B and 60 have nearly the same dimensions as those of the preforms 1A, 1B and 61 for composite materials.

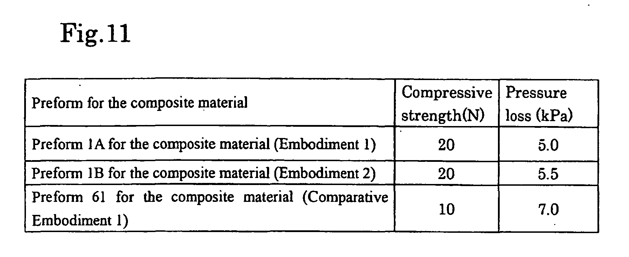

To evaluate the strength of the preforms 1A, 1B and 61 for composite materials, a compression test in which the cylindrical test piece was compressed in a radial direction was carried out. The strength was evaluated based on the measured maximum load. The results were as shown in FIG. 11. Whereas the compressive strength of the preform 61 for a composite material of Comparative Embodiment 1 was about 10 N, the strength of the preforms 1A and 1B for composite materials of Embodiments 1 and 2were each about 20 N. Accordingly, it was proven that the preforms 1A and 1B for composite materials had high strength.

The air permeability test for the preforms 1A, 1B and 61 for composite materials was carried out by blowing air at a predetermined pressure from one end of the cylindrical test piece. The pressure of air ejected from the other end of the test piece was measured. A pressure loss determined from the measured pressure was evaluated as the permeability. Namely, as the pressure loss decreases, the better air permeability is improved. The air permeability test is performed in accordance with JIS R2115, "air permeability test method for refractory bricks". The results were as shown in FIG. 11. Whereas the air permeability of the preform 61 for a composite material of Comparative Embodiment 1 was about 7.0 KPa, the air permeability of the preform 1A for a composite material of Embodiment 1 was about 5.0 KPa and the air permeability of the preform 1B for a composite material of Embodiment 2 was about 5.5 KPa. Accordingly, it was proven that the preforms 1A and 1B for composite materials had excellent air permeability.

Further, a Vickers hardness test was carried out as a hardness evaluation test for evaluating the strength of each of the metal composite materials 10A, 10B and 60. The Vickers hardness test was carried out in accordance with JIS Z 2244. Thus, a specified quadrangular pyramid indenter was pressed against a surface of an aluminum composite layer of each of the aluminum composite materials at an applied load of 98 N to measure the hardness thereof. As a result, it was found that while the hardness of the metal composite material 60 of Comparative Embodiment 1 was 110 Hv, the hardness of the metal composite material of the metal composite material 10A of Embodiment 1 was 125 Hv and the hardness of the metal composite material of the metal composite material 10B of Embodiment 2 was about 135 Hv. Accordingly, it was proven that the metal composite materials 10A and 10B had excellent hardness.

Further, a test for evaluating the durability of each of the metal composite materials 10A, 10B and 60 was carried out. It was found that the metal composite materials 10A and 10B of Embodiments 1 and 2 had better durability than the metal composite material 60 of Comparative Embodiment 1. Such results of the durability evaluation and hardness evaluation are apparent in view of the fact that the metal composite materials 10A and 10B are sufficiently impregnated with the aluminum alloy 6' and are almost free of mold cavities (refer to FIGs. 4 and 6). Accordingly, the metal composite materials 10A and 10B according to the present invention have excellent durability and hardness and hence have high mechanical properties as compared with the metal composite material 60 of the conventional constitution.

The foregoing evaluation results indicate that the present invention can provide the preforms 1A and 1B for composite materials having both high strength and excellent air permeability as compared with the preform 61 having the conventional constitution. Further, the preforms 1A and 1B for composite materials can be applied to high-speed die casting method in which a melt 6 of an aluminum alloy is impregnated at a relatively high speed and, yet, can afford metal composite materials 10A and 10B almost free of mold cavities (unimpregnated portions). The obtained metal composite materials 10A and 10B have excellent mechanical properties (hardness and durability). Thus, the preform for a composite material and the process for the production thereof according to the present invention can give a component which meets severe performance requirements, such as an engine part of an automobile. Further, since high-speed die casting is applicable, the productivity of such composite components can be improved and high market competitive power can be provided.

Above Embodiments 1 and 2 use alumina short fibers 2 as ceramic fibers and aluminum borate particles 3 and graphite particles 5 as ceramic particles. It is possible, however, to use other substances such as aluminum borate whiskers and potassium titanate whiskers. Further, it is also possible to use either ceramic fibers or ceramic particles singly. Even with such a constitution, it is possible to obtain function and effect similar to those attained in Embodiments 1 and 2. Furthermore, it is possible not to use the graphite particles 5. Or it is possible to substitute activated carbon for the graphite particles 5. However, graphite particles or activated carbon can improve abrasion resistance and vibration damping property and, therefore, can be suitably used for producing engine parts. When neither graphite particles nor activated carbon is used, the sintering step can be performed in air since it is no longer necessary to prevent disappearance by oxidation.

With regard to the shape and size of the reinforcing materials such as alumina short fibers 2, aluminum borate particles 3 and graphite particles 5, it is possible to produce a preform 1 for a composite material showing the same degree of function and effect as above, when, for example, alumina short fibers 2 having an average diameter of 1 µm to 10 µm and an average bulk ratio of 10 cc/5 gf to 50 cc/5 gf are used. Similarly, aluminum borate particles 3 having an average diameter of 1 µm to 100 µm and graphite particles 5 having an average diameter of 1 µm to 1,000 µm may also be used. When other ceramic fibers and ceramic particles than the above-described reinforcing materials are used, the shape and size thereof may be suitably nearly the same as above.

In the above-described process for producing a preform 1 for a composite material, the sintering step may be carried out at a temperature of 800°C to 1,500°C, though the temperature varies depending upon other conditions. For example, the sintering step may be carried out at a relatively low temperature by mixing an accelerator for accelerating the sintering reaction. In the case of Embodiments 1 and 2, the sintering is suitably carried out at 1,000°C to 1,200°C.

In Embodiment 1, an amorphous calcium-silicon sinter (Ca-Si sinter) 11 in a glassy state is formed by the process of producing the above-described preform 1 for a composite material. In Embodiment 2, a calcium-boron-silicon sinter (Ca-B-Si sinter) 12 in a glassy state is formed. However, depending upon the mixing amount in the mixing step and the calcining conditions in the sintering step, the sinter may be a compound in the form of crystals. Even when the sinter is in the form of crystals, the same function and effect as above can be properly obtained.

The present invention is not limited to the above-described Embodiments but may be embodied appropriately in other forms within the scope of the gist of the present invention.

### [Brief Description of the Drawings]

FIG. 1 is an illustration explanatory of a preform production process for producing a preform 1 for a composite material.
FIG. 2 is an illustration explanatory of a die casting step for molding a metal composite material 10 from the preform 1 for a composite material obtained by the above preform production process.
FIG. 3A is an enlarged photograph and FIG. 3B is a partial, further enlarged photograph of a preform 1A for a composite material of Embodiment 1.
FIG. 4 is an enlarged, schematic illustration of the above preform 1A for a composite material.
FIG. 5 is an enlarged photograph of a cross-section of a metal composite material 10A obtained from the above preform 1A for a composite material.
FIG. 6A is an enlarged photograph and FIG. 6B is a partial, further enlarged photograph of a preform 1B for a composite material of Embodiment 2.
FIG. 7 is an enlarged photograph of a cross-section of a metal composite material 10B obtained from the above preform 1B for a composite material.
FIG. 8A is an enlarged photograph and FIG. 8B is a partial, further enlarged photograph of a preform 61 for a composite material of Comparative Embodiment 1.

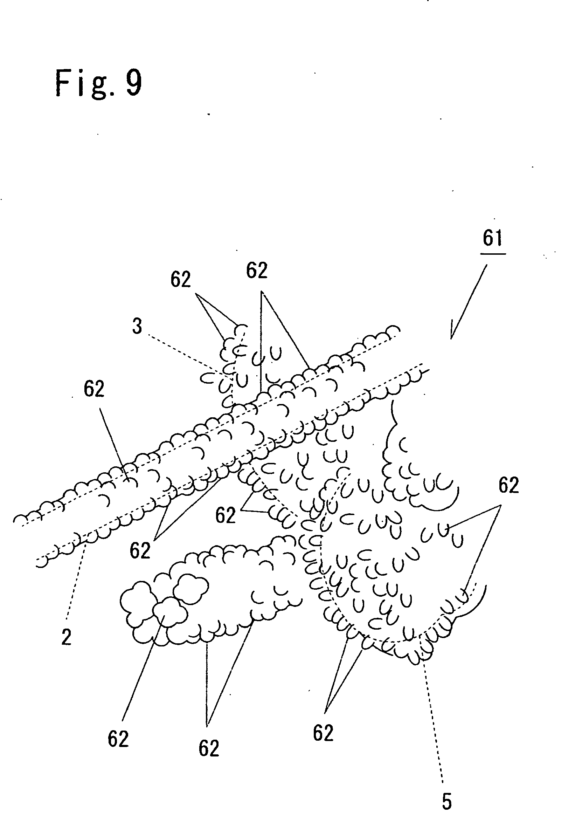

FIG. 9 is an enlarged, schematic illustration of the above preform 61 for a composite material.
FIG. 10 is an enlarged photograph of a cross-section of a metal composite material 60 obtained from the above preform 61 for a composite material.
FIG. 11 is a table showing the results of evaluation of strength and air permeability of the preforms 1A, 1B and 61 for composite materials obtained in Embodiments 1 and 2 and Comparative Embodiment 1, respectively.

### [Explanation of Reference Numerals]

- 1, 1A and 1B:: Preforms for composite materials
- 2:: Alumina short fibers (ceramic fibers)
- 3:: Aluminum borate particles (ceramic particles)
- 4:: Calcium carbonate particles
- 6:: Melt of an aluminum alloy
- 7.: Silica sol
- 8:: Aqueous mixture liquid
- 9:: Mixture
- 10, 10A and 10B:: metal composite materials
- 11:: Calcium-silicon sinter (Ca-Si sinter)
- 12:: Calcium-boron-silicon sinter (Ca-B-Si sinter)
- 14:: Gaps

## Claims

1. (Amended) A preform for a composite material, comprising sintered ceramic fibers or/and ceramic particles and being usable for forming a metal composite material by being impregnated with a melt of a light metal, **characterized in that** the preform is obtained by mixing ceramic fibers or/and ceramic particles with a silica sol containing silica in such an amount that a weight ratio of the weight of the silica to the total weight of the ceramic fibers or/and the ceramic particles is not less than 0.01 but not greater than 0.15, and calcium carbonate in such an amount that a weight ratio of the calcium carbonate to the total weight of the ceramic fibers or/and the ceramic particles is not less than 0.001 but not greater than 0.15, the resulting mixture being sintered at a predetermined temperature, **in that** the ceramic fibers or/and the ceramic particles are bound to each other by a calcium-silicon sinter produced during the sintering by reaction of the silica sol with calcium monoxide formed by decomposition of the calcium carbonate, and **in that** gaps are formed between the fibers or/and the particles.

2. (Amended) The preform for a composite material as recited in claim 1, wherein the calcium carbonate mixed with the ceramic fibers or/and the ceramic particles together with the silica sol has a particle size of 10 µm or less.

3. (Amended) The preform for a composite material as recited in claim 1 or 3, wherein aluminum borate particles having a particle size of 10 µm or less are used as the ceramic particles prior to the sintering.

4. (Amended) A process for producing a preform for a composite material, said preform comprising sintered ceramic fibers or/and ceramic particles and being usable for forming a metal composite material by being impregnated with a melt of a light metal, **characterized in that** said process comprising:
a mixing step for mixing, in water, ceramic fibers or/and ceramic particles with a silica sol containing silica in such an amount that a weight ratio of the weight of the silica to the total weight of the ceramic fibers or/and the ceramic particles is not less than 0.01 but not greater than 0.15, and calcium carbonate in such an amount that a weight ratio of the weight of the calcium carbonate to the total weight of the ceramic fibers or/and the ceramic particles is not less than 0.001 but not greater than 0.15 to form an aqueous mixture liquid,
a dehydrating step for removing water from said aqueous mixture liquid to obtain a mixture, and
a sintering step for sintering said mixture at a predetermined temperature so that that a calcium-silicon sinter is produced during the sintering by reaction of the silica sol with calcium monoxide formed by decomposition of the calcium carbonate, with the ceramic fibers or/and the ceramic particles being bound to each other by said calcium-silicon sinter.

5. (Amended) The process for producing a preform for a composite material as recited in claim 5, wherein the calcium carbonate mixed in said mixing step has a particle size of 10 µm or less.

6. (Amended) The process for producing a preform for a composite material as recited in claim 5 or 7, wherein aluminum borate particles having a particle size of 10 µm or less are mixed as said ceramic particles to form said aqueous mixture liquid.

## Patentansprüche

1. Vorformling für ein Verbundmaterial, umfassend gesinterte keramische Fasern oder/und keramische Teilchen, verwendbar für das Formen eines Metall-Verbundmaterials durch das Tränken mit einer Leichtmetallschmelze, **dadurch gekennzeichnet, dass** man den Vorformling durch das Mischen von keramischen Fasern oder/und keramischen Teilchen mit einem Silika-Sol erhält, das Silika in einer Menge enthält, durch die das Gewichtsverhältnis des Silikagewichts zum Gesamtgewicht der keramischen Fasern oder/und der keramischen Teilchen nicht kleiner als 0,01 und nicht größer als 0,15 ist, und Calciumcarbonat in einer Menge, durch die das Gewichtsverhältnis des Calciumcarbonats zum Gesamtgewicht der keramischen Fasern oder/und der keramischen Teilchen nicht kleiner als 0,001 und nicht größer als 0,15 ist, und die entstehende Mischung bei einer vorbestimmten Temperatur gesintert wird, wobei die keramischen Fasern oder/und die keramischen Teilchen durch einen Calcium-Silicium-Sinter verbunden werden, der während des Sinterns durch die Reaktion des Silika-Sols mit Calciummonoxid erzeugt wird, das durch die Zersetzung des Calciumcarbonats entsteht, und wobei Spalte zwischen den Fasern oder/und Teilchen gebildet werden.

2. Vorformling eines Verbundmaterials nach Anspruch 1, wobei das Calciumcarbonat, das zusammen mit dem Silika-Sol mit den keramischen Fasern oder/und den keramischen Teilchen gemischt wird, eine Teilchengröße von 10 µm oder weniger hat.

3. Vorformling eines Verbundmaterials nach Anspruch 1 oder 2, wobei vor dem Sintern Aluminiumborat-Teilchen mit einer Teilchengröße von 10 µm oder weniger als keramische Teilchen verwendet werden.

4. Verfahren zum Herstellen eines Vorformlings für ein Verbundmaterial, wobei der Vorformling gesinterte keramische Fasern oder/und keramische Teilchen enthält und dazu verwendbar ist, ein Metall-Verbundmaterial auszubilden, und zwar durch das Tränken mit einer Leichtmetallschmelze, **dadurch gekennzeichnet, dass** das Verfahren umfasst:
einen Mischschritt, bei dem in Wasser keramische Fasern oder/und keramische Teilchen mit einem Silika-Sol gemischt werden, das Silika in einer Menge enthält, durch die das Gewichtsverhältnis des Silikagewichts zum Gesamtgewicht der keramischen Fasern oder/und der keramischen Teilchen nicht kleiner als 0,01 und nicht größer als 0,15 ist, und Calciumcarbonat in einer Menge, durch die das Gewichtsverhältnis des Calciumcarbonatgewichts zum Gesamtgewicht der keramischen Fasern oder/und der keramischen Teilchen nicht kleiner als 0,001 und nicht größer als 0,15 ist, damit eine wässerige Mischflüssigkeit entsteht;
einen Trocknungsschritt, durch den Wasser aus der wässerigen Mischflüssigkeit entfernt wird, damit man eine Mischung erhält; und
einen Sinterschritt zum Sintern der Mischung bei einer vorbestimmten Temperatur, so dass während des Sinterns ein Calcium-Silicium-Sinter erzeugt wird, und zwar durch die Reaktion des Silika-Sols mit Calciummonoxid, das durch die Zersetzung des Calciumcarbonats entsteht, wobei die keramischen Fasern oder/und die keramischen Teilchen durch den Calcium-Silicium-Sinter miteinander verbunden werden.

5. Verfahren zum Herstellen eines Vorformlings für ein Verbundmaterial nach Anspruch 4, wobei das Calciumcarbonat, das in dem Mischschritt vermischt wird, eine Teilchengröße von 10 µm oder weniger hat.

6. (Geändert) Verfahren zum Herstellen eines Vorformlings für ein Verbundmaterial nach Anspruch 4 oder 5, wobei Aluminiumborat-Teilchen mit einer Teilchengröße von 10 µm oder weniger als keramische Teilchen zu Bilden der wässerigen Mischflüssigkeit vermischt werden.

## Revendications

1. Ebauche pour matériau composite, comprenant des fibres de céramique et/ou des particules de céramique frittées, et utilisable pour former un matériau composite métallique en étant imprégnée d'une masse fondue d'un métal léger, l'ébauche étant **caractérisée en ce qu'**elle est obtenue par mélange de fibres de céramique et/ou de particules de céramique avec un sol de silice contenant de la silice en une quantité telle que le rapport en poids du poids de la silice au poids total des fibres de céramique et/ou des particules de céramique soit d'au moins 0,01 mais d'au plus 0,15, et de carbonate de calcium en une quantité telle que le rapport en poids du carbonate de calcium au poids total des fibres de céramique et/ou des particules de céramique soit d'au moins 0,001 mais d'au plus 0,15, le mélange résultant étant fritté à une température prédéterminée, **en ce que** les fibres de céramique et/ou les particules de céramique sont liées entre elles par un aggloméré à base de calcium-silicium produit durant le frittage par réaction du sol de silice avec le monoxyde de calcium formé par décomposition du carbonate de calcium, et **en ce que** des espaces sont formés entre les fibres et/ou les particules.

2. Ebauche pour matériau composite selon la revendication 1, dans laquelle le carbonate de calcium mélangé avec les fibres de céramique et/ou les particules de céramique ensemble avec le sol de silice a une granulométrie de 10 µm ou moins.

3. Ebauche pour matériau composite selon la revendication 1 ou 2, dans laquelle des particules de borate d'aluminium ayant une granulométrie de 10 µm ou moins sont utilisées en tant que particules de céramique avant le frittage.

4. Procédé pour produire une ébauche pour matériau composite, ladite ébauche comprenant des fibres de céramique et/ou des particules de céramique frittées, et étant utilisable pour former un matériau composite métallique en étant imprégnée d'une masse fondue d'un métal léger, ledit procédé étant **caractérisé en ce qu'**il comprend:
une étape de mélange pour mélanger, dans de l'eau, des fibres de céramique et/ou des particules de céramique avec un sol de silice contenant de la silice en une quantité telle que le rapport en poids du poids de la silice au poids total des fibres de céramique et/ou des particules de céramique soit d'au moins 0,01 mais d'au plus 0,15, et du carbonate de calcium en une quantité telle que le rapport en poids du poids du carbonate de calcium au poids total des fibres de céramique et/ou des particules de céramique soit d'au moins 0,001 mais d'au plus 0,15, pour former un liquide en mélange aqueux,
une étape de déshydratation pour éliminer l'eau dudit liquide en mélange aqueux afin que soit obtenu un mélange, et
une étape de frittage pour fritter ledit mélange à une température prédéterminée de façon qu'un aggloméré à base de calcium-silicium soit produit durant le frittage par réaction du sol de silice avec le monoxyde de calcium formé par décomposition du carbonate de calcium, les fibres de céramique et/ou les particules de céramique étant liées entre elles par ledit aggloméré à base de calcium-silicium.

5. Procédé pour produire une ébauche pour un matériau composite selon la revendication 4, dans lequel le carbonate de calcium mélangé dans ladite étape de mélange a une granulométrie de 10 µm ou moins.

6. Procédé pour produire une ébauche pour un matériau composite selon la revendication 4 ou 5, dans lequel des particules de borate d'aluminium ayant une granulométrie de 10 µm ou moins sont mélangées à titre desdites particules de céramique pour former ledit liquide en mélange aqueux.
